# EUROPEAN PATENT APPLICATION

(11) **EP 1 545 072 A1**
(43) Date of publication of application: **22.06.2005**
(21) Application number: 03293274.1
(22) Date of filing: 19.12.2003
(51) Int. Cl.: H04L 12/56

(54) **Border router for a communication network**

(71) Applicant: ALCATEL, 75008 Paris (FR)
(72) Inventor: Galand, Damien, 92370 Chaville (FR); Marce, Olivier, 91300 Massy (FR)
(74) Representative: Plas, Axel

(57) **Abstract**

A border router (7) for a communication network, comprises a routing table (31) and a reception module (30) intended to receive a routing table update message (10) in order to update said routing table (31), and an integrity detection module (33) intended to detect that the update message is suspicious and to trigger an active probe message (10A) in order to undertake a check of the consistency of the path followed by said update message (10) in said communication network.

## Description

The present invention relates to a border router for a communication network, comprising a routing table and a reception module intended to receive from an other direct linked border router a routing table update message in order to update its routing table.

More particularly, the present invention relates to a border router known as Border Gateway Protocol (BGP) border router. Such a border router. Border routers are disposed in different Autonomous System (AS) of a communication network.

The present invention relates to a BGP border router for a communication network such as Internet.

A communication network in which a border router according to the invention can be integrated is divided in several ASs. An AS comprises a group of several routers under a common administration and with a common routing policies. Within an AS, the Interior Gateway Protocol (IGP) is usually used for the exchange of routing information between IGP routers. On the other hand, BGP is mainly used to exchange routing information between BGP routers belonging to different ASs.

The Border Gateway Protocol is an interautonomous system routing protocol. The routing information is contained in the BGP Update message. This message is exchanged between two BGP routers belonging to different ASs so that BGP routers inform each other of routing changes.

BGP is widely used because of its robustness and scalability. Thus, BGP can be used to scale large enterprise networks. To achieve scalability, BGP uses attributes as route parameters to determine the best route to a destination and maintain a stable routing environment.

In a BGP message of the Update type, transmitted from a first BGP router to a second BGP router belonging to different ASs, the Network Layer Reachability Information (NLRI) attribute define the destination address, and the AS_Path attribute define a single feasible route composed of ASs to go through to reach the NLRI.

The update process of BGP routers' routing table is based on the advertisement of a single feasible route to ASs. When changes to the routing table in a certain AS are detected the new route to this destination network is advertised via the IGP to all routers within said AS and then the path to said AS is advertised via the BGP Update message to the neighbouring BGP routers belonging to different ASs.

As it will be illustrated below, the single feasible route to the said AS is constructed step by step by adding AS numbers to the AS_Path attribute when the ASs are crossed by the BGP Update message. Consequently, the single feasible route is constructed at the same time as it is advertised. Then, the BGP Update message is spread through several ASs. The cover of ASs reached is defined according to economic strategies and political considerations. As a result, these routing information will be used to update the routing table of BGP routers so that BGP routers are always able to determine the best route to a certain destination.

Nevertheless, before two BGP routers exchange routing information, a TCP ("Transmission Control Protocol") connection must be first established. Indeed, TCP is in charge of dividing a BGP message in packets, reassembling them and of the retransmission of lost packets.

In a communication network such as Internet, routing changes are frequent. Routes disappear and new routes appear. Accordingly, in order to reach a stable routing environment with an acceptable convergence time, BGP routers have to frequently update their routing table from the routing information contained in the AS_Path attribute. However, AS numbers added to the AS_Path attribute of the BGP Update message are not control in any manners. An inconsistent AS number can intentionally or erroneously be added to the AS_Path, which means that this inconsistent AS number will be propagated through ASs and will introduce instabilities all over the internet routing.

Accordingly, it is an object of the present invention to provide a border router for a communication network, comprising a module intended for receiving from another border router a Border Gateway Protocol (BGP) Update message in order to update its routing table, which is able to check the consistency of the ASs' path given by AS_Path attribute.

To achieve the above object, a BGP router for a communication network according to the invention, comprising a routing table and a reception module intended to receive a routing table update message in order to update said routing table, is characterised in that it further comprises an integrity detection module intended to detect that the update message is suspicious and to trigger an active probe message in order to undertake a check of the consistency of the path followed by said update message in said communication network.

Of course, a border router according to the invention is also arranged to send back or to route said active probe message in order to proceed to the checking of the consistency of the path followed by the suspicious routing table update message.

A border router according to the invention may be arranged to trigger said active probe message in real time which means that the incoming suspicious routing table update message will be transmitted from or deleted in said border router depending on the active probe result which is received by said border router. The border router according to the invention may be also designed to trigger the active probe message a posteriori which means that routing table of the border router is updated with the incoming suspicious routing table update message and said incoming update message is transmitted from said border router and the active probe message is triggered latter.

According to the invention, a border router is arranged to check the consistency of the path followed by an incoming routing table update message by assuming that the originator of said update message is known and by trying to reach said originator by means of the routing of said active probe message in the communication network, then by comparing the path followed by the active probe message in the communication network to the one followed by said update message.

In an other variation of the invention, a border router is arranged to check the consistency of the path followed by an incoming routing table update message by assuming that said path is known then by following it and by checking if the originator of the update message is reached.

In a border router according to the invention, the active probe message can be triggered :
- Automatically after a detection that an incoming routing table update message is suspicious
- In a random way
- At regular time interval

It is also possible that the active probe message is triggered according to different probabilities of integrity of the path followed by said update message

In a border router according to the invention the active probe message can have the form of :
- A Border Gateway Protocol (BGP) Update message
- An extension of a Internet Control Message Protocol (ICMP) message

It is also possible that the active probe message has the form of a specific protocol over IP.

The present invention further relates to a communication network comprising a border router as defined above.

The present invention will be better understood from the detailed description given below and the accompanying drawings, which are given by way of illustration only, and thus are not limitative of the present invention.

Figure 1 is a synoptic of a communication network such as Internet with several Autonomous System each comprising several BGP routers.

Figure 2 shows a BGP Update message structure received by a BGP router in order to update its routing table.

Figure 3 depicts in a first embodiment, the symbolic architecture of a BGP border router according to the invention communicating with an other direct linked BGP border router.

Figure 4 is a schematic representation of the mechanism of the BGP Update message processing by a border router according to a first embodiment of the invention.

Figure 5 depicts in a second embodiment, the symbolic architecture of a BGP border router according to the invention communicating with an other direct linked BGP border router.

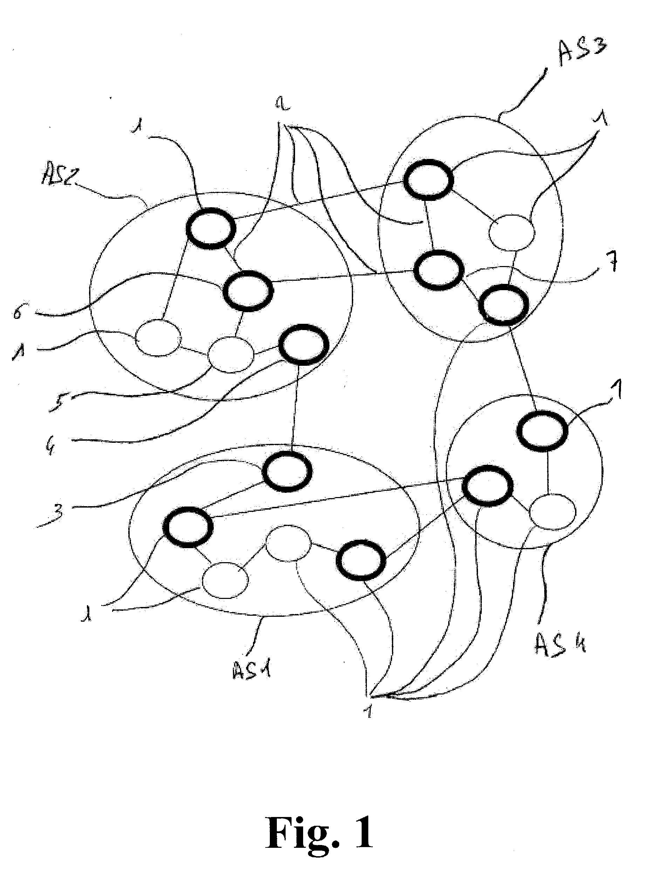

On figure 1, a communication network such as Internet is illustrated with four Autonomous Systems (AS) AS1, AS2, AS3, AS4. A plurality of BGP routers 1 belonging to different ASs are shown only to illustrate the fact an Autonomous Systems comprises several routers under a common administration. Border routers 3, 4, 5, 6, 7 are specially referenced in order to describe the present invention. A plurality of routes (paths) 2 between the routers 1, 3, 4, 5, 6, 7 are depicted. BGP border routers such as 3 and 4 are used to transmit routing information contained in the BGP update message transmitted from AS1 to AS2.

On figure 1, for clarifying purpose, BGP border routers have been represented with a bigger stroke. The IGP routers and routes are not shown on the figure 1 because it is out of the scope of the invention.

Referring to figure 1 again as an example of the updating process, an emerging route to a network in AS1 will be advertise to AS2 and AS3. Firstly, this route is advertised to all the IGP routers (not shown in figure 1) and to all the BGP routers within AS1. The NLRI attribute of BGP Update message is set with the Internet Protocol (IP) address of the network emerging in AS1. BGP routers must know all routing tables of their peers, and especially they must know which is the BGP border router to reach AS2, namely BGP border router 3, in order to transmit BGP Update message to AS2. Before transmitting the BGP Update message, the BGP border router 3 prepends the AS1 number to the well-known mandatory AS_Path attribute. It has to be noticed that prepending of AS number in the AS_Path is only performed before transmitting BGP Update message from an AS to another one. This update process is then applied to AS2. The BGP border router 4 in AS2 receives the BGP update message from the direct linked BGP border router 3 in AS1 and updates its routing table with the routing information contained in the AS_Path attribute. The BGP border router 4 spreads the BGP Update message all over the BGP routers in AS2, which will update their routing table with information contained in the BGP Update message, especially AS_Path attribute and NLRI attribute, but they will not modify the BGP Update message. As explained before, BGP routers within AS2 must know all routing tables of their peers, and especially they must know which is the BGP border router to reach AS3, namely BGP border router 6, in order to transmit BGP Update message to AS3. Then, it is especially transmitted to BGP border router 6 by going through BGP router 5. Before transmitting the BGP Update message to the BGP border router 7 in AS3, the BGP border router 6 will add AS2 number to the AS_Path attribute.

As a result, the single feasible route made of ASs to reach AS1 where the said route to a network has emerged is advertised to AS2 and AS3 by means of BGP Update message transmission. The same update process is used to advertise the route to AS4.

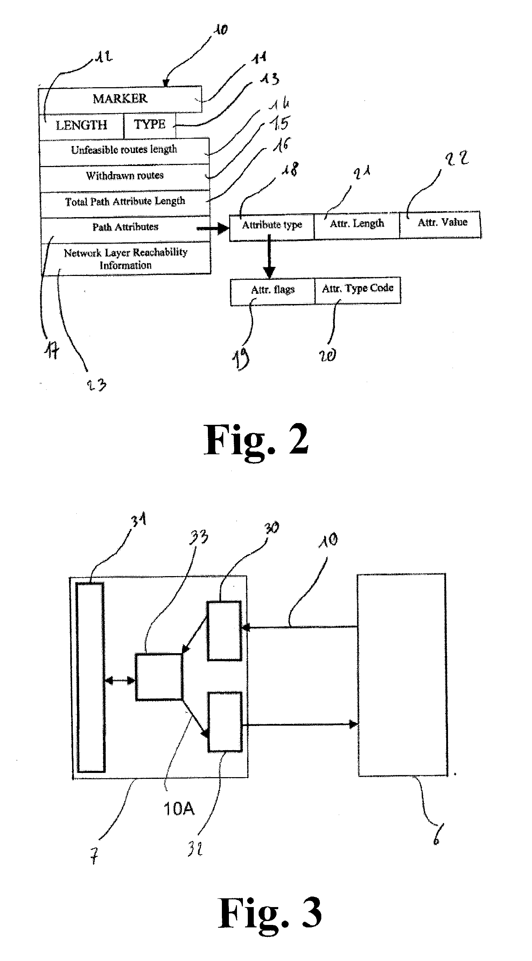

Figure 2 shows now the structure of a BGP Update message 10 received by a BGP router or BGP border router in order to update its routing table. On Figure 2, we see BGP update message fields common to all BGP message:
- MARKER 11 : authenticates the BGP message, and is used as synchronisation information
- LENGTH 12 : is the size of the BGP message 10
- TYPE 13 : is the type of sent message. It can be either OPEN, UPDATE, NOTIFICATION, or KEEPALIVE message.

In the purpose of describing the present invention we will only focus on the UPDATE type :
- Unfeasible routes length 14 : is the size in octets of withdrawn routes 15
- Withdrawn routes 15 : IP prefix address to withdraw from the routing table
- Total Path Attribute Length 16 : is the size in octets of Path Attribute 17
- Path Attribute 17 : is divided in 3 fields :

- Attribute Type 18 : is divided in 2 fields :

- Attribute flags 19 : it is not the scope of the invention
- Attribute Type Code 20 : indicates AS_Path
- Attribute Length 21 : also called the Path Segment Length in the case of a BGP Update message 10, it is the number of ASs in the Attribute Value field 22
- Attribute Value 22 : also called the Path Segment Value one or more ASs Number
- Network Layer reachability Information (NLRI) 23 : IP prefix address of the destination network emerging in a AS, AS1 in the example of figure 1, which is reachable thanks to Path Segment Value

As explain above, inconsistent AS numbers can intentionally or erroneously be added to AS_Path attribute 17 (or more accurately to the Path Segment Value 22). Actually, in the technical background there is no control of the consistency of the AS numbers in the AS_Path attribute 17. This means that actually BGP border routers update their routing table with some inconsistent AS numbers. Moreover, an inconsistent AS number added to the AS_Path attribute 17 will be propagated across ASs as the BGP Update message 10 is advertised. This process will introduce undesirable instabilities spread all over the Internet routing.

Figure 3 depicts the symbolic architecture of a first embodiment of a BGP border router according to the invention. In figure 3, an other direct linked BGP border router is also represented. More particularly, the BGP border router, for example border router 7 in AS3 in the figure 1, comprises a reception module 30 intended to receive from an other direct linked BGP border router, for example border router 6 in AS2, a BGP Update message 10 in order to update its routing table 31. Border router 7 also comprises a transmission module 32 to transmit BGP messages to other routers, for instance border router 6. In BGP border router 7 according to the invention, an integrity detection (Probe AS) module 33 is embedded to check the consistency of the AS_Path attribute 17 extracted from the incoming BGP Update message 10 and to trigger an active probe message 10A which is forward via module 32. Said active probe message allows the border router 7 to undertake a check of the consistency of the path followed by an update message in the communication network. As represented in figure 3, module 33 is designed to validate or invalidate the updating of the routing table 31.

The active probe message 10A may be triggered in real time in the Probe AS module 33 which means that the BGP Update message 10 coming from router 6 in AS2 is intercepted by the Probe AS module 33 of BGP border router 7 but will be spread in AS3 and to other ASs depending on the result of the active probe message 10A.

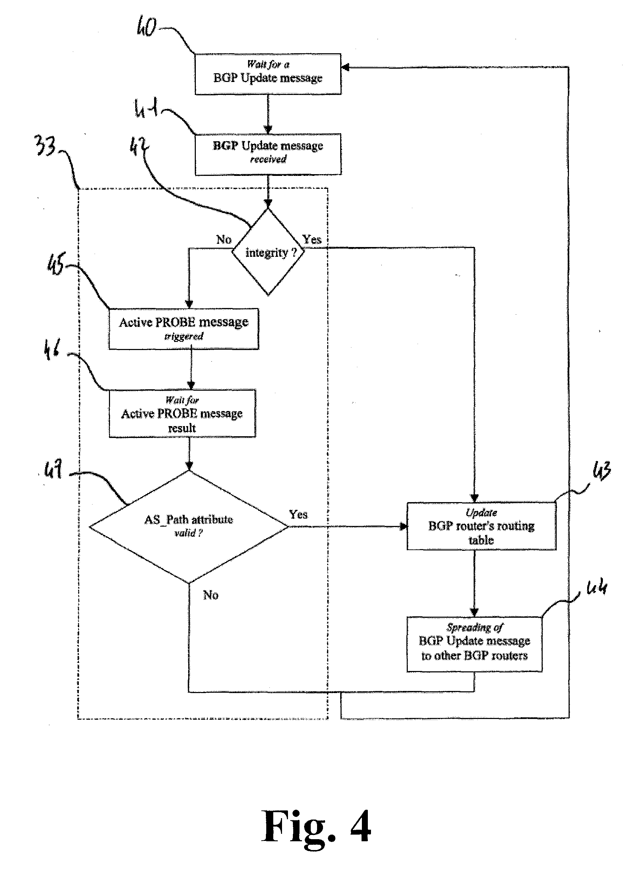

Figure 4 is a schematic representation of the mechanism of the BGP Update message processing by a border router according to the first embodiment of the invention.

The border router according to the invention, which is for example the BGP border router 7 in AS3 waits in step 40 to receive a BGP Update message 10 from an other BGP border router, 6 in AS2 for example.

Once a BGP Update message is received in step 41, the Probe AS module 33 checks the integrity of the BGP Update message 10 in step 42, and more specifically the integrity of the AS_Path attribute 17 values, namely the AS numbers crossed by the BGP Update message 10. On the basis of the knowledge that an Autonomous System has in the past added false AS numbers to the AS_Path attribute 17, or has added an AS number several times, this AS should be detected as suspicious as the BGP Update message coming therefrom. The detection in a first time that a particular AS should be considered suspicious is carried out when the active probe message comes back to the border router which has trigger said active probe message. Then, ASs are considered suspicious according to probabilities based on the previous triggered active probe message results. Otherwise, an AS is considered suspicious according to economic and political considerations. If none of the ASs of the AS_Path attribute 17 are considered suspicious then the routing table 31 of BGP border router 7 is updated in step 43 and the BGP Update message 10 is transmitted in step 44 to an other BGP border router, for example router 4, via several other BGP routers.

If one of the ASs is considered suspicious in step 42, then an active probe message 10A is automatically triggered in step 45 by the Probe AS module 33 via the transmission module 32. This active probe message 10A is designed to verify the consistency of the AS path contain in the AS_Path attribute 17. The active probe message can for example be a special BGP Update message working as a standard BGP update message 10.

In the first embodiment, the active probe message will try to reach the IP prefix address extracted from the NLRI 23 of the BGP Update message 10 thanks to the routing table 31 of the different crossed BGP routers.

In this solution the AS_Path attribute 17 extracted from the BGP Update message 10 received by the BGP border router 7 is supposed unknown in order to verify it. AS number of the crossed ASs are collected in the AS_Path attribute 17 of the active probe message. In the mean time, BGP border router 7 waits in step 46 for active probe message result.

Once the active probe message has reached the AS of the destination pointed by IP prefix address of the NLRI 23, in our example AS1, the active probe message is send back to the BGP border router 7 which triggered first the active probe message. The BGP border router 3 in AS1 in response to the reception of the active probe message, and because he knows the IP address in NLRI 23 belongs to AS1, send back the active probe message and all the collected AS numbers with it, to BGP border router 7. Then, the Probe AS module 33 of router 7 compares in step 47 the AS numbers collected by the active probe message to the AS numbers extracted from AS_Path attribute 17 of the BGP Update message 10. If the AS numbers are the same then the routing table 31 is updated in step 43 and the BGP update message 10 is transmitted to other ASs in step 44. Otherwise, the BGP Update message 10 is deleted and the corrupted AS will be considered suspicious with higher probabilities for the next exchange of routing information.

In a variation of the mechanism of the BGP Update message processing, the ASs numbers collected by the active probe message can be used to update the routing table 31 of the BGP border router 7 and to correct the AS_Path attribute 17 of the BGP Update message 10. Then, the BGP Update message can be spread over AS3 and transmitted to other ASs.

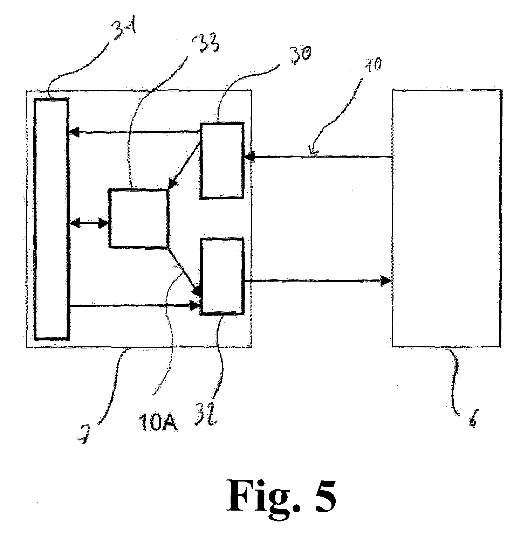

Figure 5 depicts in a second embodiment, the symbolic architecture of a BGP border router according to the invention. Depending on the routing policies of the AS in which the BGP border router belongs, the active probe is either triggered in real time, as depicted above with figure 3, or triggered a posteriori because border routers can be overloaded. This means that routing table 31 is updated with the routing information contained in the BGP Update message 10 and the BGP Update message 10 is spread in the concerned AS and transmitted to other ASs. The Probe AS module 33 of the concerned border router 7 can wait other border routers to be less overloaded to trigger the active probe message in the same manner as explained above. This second embodiment contributes to not increase convergence time.

Alternatively, another solution for verifying the consistency of the AS_Path attribute 17 using the active probe message can be applied in the two previous embodiments depicted in figures 3 and 5. This time, the AS_Path attribute 17 is supposed to be known, namely AS1, AS2. The active probe message follows the path of ASs given by ASs numbers extracted from the AS_path 17 of the received BGP update message 10. Then if the final AS reached is not the AS to which the NLRI address belongs, in our example AS1, or if one of the cross AS has an inconsistent AS number, then an error message is send back to the BGP border router which triggered the active probe message, in our example BGP border router 7. Then, the BGP Update message 10 is deleted and the corrupted AS will be considered suspicious with higher probabilities for the next exchange of routing information. Otherwise a validation message is send back to the BGP border router 7 which triggered the active probe message and the routing table 31 is updated and the BGP update message 10 is spread in the concerned AS and transmitted to other ASs

In the present invention the active probe message 10A can also be triggered in a random way, at regular interval, or according to different probabilities of integrity of the Autonomous Systems in the AS_Path 17. All these solutions can be applied in any of the previous embodiments.

The active probe message 10A can also take these two other forms and can be used in any of the previous embodiments of the present invention :
- An extension of an Internet Control Message Protocol (ICMP) message in which a field is added in order to be applied to the first embodiment. This field allows to collect AS numbers as AS_Path attribute 17 in the BGP Update message 10. This ICMP message is sent to one or more AS thanks to the source route option. In the case of an error occurring in the AS crossed, a message will be send back to the BGP border router which triggered the active probe message.
- A specific IP protocol : an independent application above IP

## Claims

1. A border router (7) for a communication network, comprising a routing table (31) and a reception module (30) intended to receive a routing table update message (10) in order to update said routing table (31), **characterised in that** it further comprises an integrity detection module (33) intended to detect that the update message is suspicious and to trigger an active probe message (10A) in order to undertake a check of the consistency of the path (17) followed by said update message (10) in said communication network.

2. A border router as defined in claim 1, wherein said active probe message (10A) is triggered automatically.

3. A border router as defined in claim 1, wherein said active probe message (10A) is triggered in a random way.

4. A border router as defined in claim 1, wherein said active probe message is triggered at regular time interval.

5. A border router as defined in one of the claims 1 to 4, wherein said active probe message (10A) has the form of a Border Gateway Protocol (BGP) message.

6. A border router as defined in one of the claims 1-4, wherein said active probe message (10A) has the form of an extension of an Internet Control Message Protocol (ICMP) message.

7. A communication network comprising a border router according to one of the claims 1 to 6.
